# EUROPÄISCHE PATENTANMELDUNG

(11) **EP 1 696 142 A2**
(43) Veröffentlichungstag der Anmeldung: **30.08.2006**
(21) Anmeldenummer: 05111942.8
(22) Anmeldetag: 12.12.2005
(51) Int. Cl.: F16C 13/00, D21G 1/02, F16C 13/02

(54) **Biegeausgleichswalze**

(30) Priorität: 15.02.2005 DE 102005006816
(71) Anmelder: Voith Paper Patent GmbH, 89522 Heidenheim (DE)
(72) Erfinder: Hellmanns, Ludger, 47509, Rheurdt (DE)

(57) **Zusammenfassung**

Eine Biegeausgleichswalze umfasst einen umlaufenden Walzenmantel, ein den Walzenmantel axial durchsetzendes, drehfest gelagertes Joch und wenigstens ein zwischen Joch und Walzenmantel angeordnetes Stützelement zur Ausübung einer Stützkraft auf die Innenseite des Walzenmantels in einer Pressebene. Dabei ist wenigstens ein Ende des Walzenmantels durch wenigstens ein Lager drehbar in oder an einem Lagergehäuse gelagert, das bezüglich des Jochs gegen Verdrehung gesichert ist. Das Lagergehäuse ist über eine doppelarmige Pendelstütze mit dem Joch gekoppelt, deren Arme auf einander gegenüberliegenden, jeweils um 90° gegenüber der Pressebene versetzten Seiten des Jochs angeordnet sind und im Bereich eines Endes jeweils am Lagergehäuse und im Bereich des anderen Endes jeweils am Joch angelenkt sind. Dabei erstrecken sich die Gelenkachsen jeweils senkrecht zur Pressebene. Das Lagergehäuse ist über die doppelarmige Pendelstütze gegen Verdrehung gesichert.

## Beschreibung

Die Erfindung betrifft eine Biegeausgleichswalze mit einem umlaufenden Walzenmantel, einem den Walzenmantel axial durchsetzenden, drehfest gelagerten Joch und wenigstens einem zwischen Joch und Walzenmantel angeordneten Stützelement zur Ausübung einer Stützkraft auf die Innenseite des Walzenmantels in einer Pressebene, wobei wenigstens ein Ende des Walzenmantels durch wenigstens ein Lager drehbar in oder an einem Lagergehäuse gelagert ist, das bezüglich des Joch gegen Verdrehung gesichert ist.

Derartige Biegeausgleichswalzen, die in der Praxis häufig in den Press- und Glättpartien von Papiermaschinen eingesetzt werden, sind bekannt und häufig insbesondere als sogenannte selbstbelastende der selbstanstellende Biegeausgleichswalzen ausgeführt, bei denen der Walzenmantel zum Öffnen und Zustellen des betreffenden Pressspaltes durch Stützelemente gegenüber dem Joch um mehrere Zentimeter verlagert werden kann.

Die axiale Fixierung des Walzenmantels auf der Triebseite erfolgt bisher häufig durch einen in eine Jochnut eingelegten Keil oder einen Sicherungsring, wodurch das Lagergehäuse zwischen dem Jochabsatz zum Ballen und dem Keil bzw. Sicherungsring entsprechend positioniert wird. Zudem stützen sich die Momente aufgrund der Lager- und Dichtungsreibung bei den betreffenden bekannten Biegeausgleichswalzen in der einer Selbstbelastung dienenden Kulisse ab. Die Momente aus dem Walzenantrieb werden durch eine als Pendelstütze am Getriebegehäuse vorgesehene Drehmomentstütze aufgenommen.

Bei den bisher üblichen Walzen mit konzentrisch zum Joch gelagertem Mantel erfolgt häufig eine Krafteinleitung über die Wälzlager, während bei den bisher üblichen selbstbelastenden Walzen mit frei beweglichem Mantel die Krafteinleitung häufig durch einen Lagerkolben unter der Lagerbuchse erfolgt (vgl. z.B. EP 0 787 912 B1). Ein entsprechender Lagerkolben bringt nun aber den Nachteil einer Schwächung des Jochquerschnitts mit sich.

Der Mantelhub einer jeweiligen selbstbelastenden Walze wird bisher in der Regel durch Abflachungen an der Buchse und dem Joch in der Niprichtung begrenzt.

Eine Biegeausgleichswalze der eingangs genannten Art ist beispielsweise in der EP 0 787 912 B1 beschrieben. Bei dieser bekannten Biegeausgleichswalze ist zur axialen Führung des Lagergehäuses ein Führungsring vorgesehen, der durch ein Gelenklager mit einer kugeligen Lagerfläche dreh- und kippbar am Joch gelagert ist. Zur Führung der Mantelhubbewegung dieser selbstbelastenden Walze sind zwischen einer Stirnfläche des Jochs und dem Lagergehäuse Führungselemente vorgesehen, über die das Lagergehäuse gleichzeitig bezüglich des Jochs gegen Verdrehen gesichert ist. Zur Dämpfung oder zur Krafteinleitung kann zwischen dem Joch und einem jeweiligen Walzenmantelende eine Zylinder/Kolben-Anordnung vorgesehen sein.

Der Erfindung liegt die Aufgabe zugrunde, eine verbesserte Biegeausgleichswalze der eingangs genannten Art zu schaffen. Dabei soll insbesondere die axiale Positionierung des Walzenmantels relativ zum Joch optimiert und dabei auf möglichst einfache Weise gleichzeitig eine zuverlässige Sicherung gegen Verdrehen erreicht werden. Schließlich soll eine jeweilige Krafteinleitung über das Lager auch ohne Schwächung des Jochquerschnitts an kritischen Stellen möglich sein.

Diese Aufgabe wird erfindungsgemäß dadurch gelöst, dass das Lagergehäuse über eine doppelarmige Pendelstütze mit dem Joch gekoppelt ist, deren Arme auf einander gegenüberliegenden, jeweils um 90° gegenüber der Pressebene versetzten Seiten des Joch angeordnet sind und im Bereich einen Endes jeweils am Lagergehäuse und im Bereich des anderen Endes jeweils am Joch angelenkt sind, wobei sich die Gelenkachsen jeweils senkrecht zur Pressebene erstrecken, und wobei das Lagergehäuse über diese doppelarmige Pendelstütze gegen Verdrehung gesichert ist.

Dabei ist die Walze bevorzugt als selbstbelastende Walze ausgeführt.

Mit der doppelarmigen Pendelstütze ist eine entsprechende axiale Positionierung des Walzenmantels relativ zum Joch sichergestellt, wobei ein bestimmter Winkelversatz zwischen dem betreffenden Walzenmantelende und dem Joch zugelassen ist. Gleichzeitig ist das betreffende Mantelende durch die doppelarmige Pendelstütze bezüglich des Jochs gegen Verdrehung gesichert. Überdies können über die Pendelstütze nunmehr Kräfte eingeleitet werden, ohne dass dazu eine Schwächung des Jochquerschnitts insbesondere im kritischen Bereich eines verjüngten Jochzapfens erforderlich wäre.

Die doppelarmige Pendelstütze umfasst vorzugsweise einen Ring, mit dem die beiden Arme an einem Ende jeweils fest verbunden sind. Dabei sind die beiden Arme der Pendelstütze zweckmäßigerweise über den Ring am Joch angelenkt.

Die Gelenkverbindungen zwischen der doppelarmigen Pendelstütze und dem Lagergehäuse bzw. dem Joch können jeweils durch eine Bolzenverbindung gebildet sein.

Die beiden Arme der Pendelstütze sind zweckmäßigerweise zueinander parallel.

Eine bevorzugte praktische Ausführungsform der erfindungsgemäßen Biegeausgleichswalze zeichnet sich dadurch aus, dass der Ring das Joch umschließt und um eine durch die Gelenkverbindungen zwischen Ring und Joch definierte Schwenkachse relativ zum Joch verschwenkbar ist. Dabei können am Joch abgestützte Mittel vorgesehen sein, über die der Ring mit einer zumindest im Wesentlichen axial gerichteten, den Ring in Schwenkrichtung belastenden Kraft beaufschlagbar ist. Die betreffenden Mittel können zweckmäßigerweise wenigstens einen Winkelhebel umfassen.

Von Vorteil ist insbesondere auch, wenn die Gelenkverbindungen zwischen der doppelarmigen Pendelstütze und dem Lagergehäuse axial im Bereich des zwischen dem Walzenmantelende und dem Lagergehäuse vorgesehenen Lagers angeordnet sind. Es kann dann beispielsweise durch Krafteinleitung in Axialrichtung in den Ring, der die beiden Arme der Pendelstütze miteinander verbindet, eine resultierende Kraft in der Lagerebene erzeugt werden, die je nach Kraftrichtung in Niprichtung oder entgegen der Niprichtung über das Lager in den Mantel geleitet wird.

Die beiden Arme der Pendelstütze können bei einer selbstbelastenden Walze an den aufeinander gegenüberliegenden Seiten des Jochs vorgesehenen Kulissenflächen der betreffenden Kulissenführung anliegen.

Bei einem zwischen dem Walzenmantelende und dem Lagergehäuse vorgesehenen nicht selbstausgleichenden Lager ist die eine Selbstbelastung der Walze ermöglichende Kulissenführung vorzugsweise so ausgelegt, dass ein bestimmter Winkelversatz zwischen Walzenmantelende und Joch zugelassen ist.

Die Hubbewegung des Walzenmantels relativ zum Joch kann insbesondere durch eine jeweilige taschenförmigen Gestaltung und/oder einen jeweiligen Überstand der am Joch vorgesehenen Kulissenflächen begrenzt sein.

Eine bevorzugte praktische Ausführungsform der erfindungsgemäßen Biegeausgleichswalze zeichnet sich dadurch aus, dass das Walzenmantelende einen axialen Fortsatz umfasst und dass dieser axiale Fortsatz durch das Lager drehbar in bzw. an dem Lagergehäuse gelagert ist.

Das Walzenmantelende bzw. der axiale Fortsatz kann durch das Lager drehbar auf einem sich in den Bereich zwischen Walzenmantelende bzw. axialem Fortsatz und Joch erstreckenden axialen Ansatz des Lagergehäuses gelagert sein. In diesem Fall ist die doppelarmige Pendelstütze zweckmäßigerweise an dem axialen Ansatz des Lagergehäuses angelenkt.

In bestimmten Fällen ist es von Vorteil, wenn der Walzenmantel durch zwei axial beabstandete Wälzlager in bzw. an dem Lagergehäuse gelagert ist. Dabei sind die Gelenkverbindungen zwischen der doppelarmigen Pendelstütze und dem Lagergehäuse vorzugsweise axial im Bereich zwischen den beiden Wälzlagern angeordnet.

Bei einer zweckmäßigen praktischen Ausführungsform der erfindungsgemäßen Biegeausgleichswalze sind das Lagergehäuse und die doppelarmige Pendelstütze im Bereich eines gegenüber dem zentralen Bereich des Jochs verjüngten Jochzapfens vorgesehen.

Die axiale Fixierung des Walzenmantels bezüglich des Jochs erfolgt also mittels einer doppelarmigen Pendelstütze, deren Arme am einen Ende jeweils beispielsweise mittels eines sich senkrecht zur Pressebene erstreckenden Bolzens am Joch angelenkt sind und am anderen Ende jeweils beispielsweise wieder mittels eines Bolzens an dem Lagergehäuse angelenkt sind. Dabei bewegen sich die beiden Arme der Pendelstütze in der Kulissenfläche.

Die beiden Arme der Pendelstütze können in der Ebene der Bolzenverbindung zum Joch fest mit einem Ring verbunden sein, so dass die beiden Arme der Pendelstütze stets die gleiche Schwenkbewegung ausführen und an der Bolzenverbindung zum Lagergehäuse ein Drehmoment um die Jochachse aufnehmen können.

Durch eine axiale Krafteinleitung in den die beiden Arme der Pendelstütze miteinander verbindenden Ring wird eine resultierende Kraft in der Lagerebene erzeugt, die je nach Kraftrichtung in Niprichtung oder entgegen der Niprichtung über das Lager in den Mantel geleitet wird.

An den Kulissenflächen des Jochs kann beispielsweise jeweils ein Überstand verbleiben, auf dem sich die Arme der Pendelstütze ablegen können. Zur entsprechenden Begrenzung der Hubbewegung des Walzenmantels können diese Kulissenflächen beispielsweise auch taschenartig ausgestaltet sein. Die doppelarmige Pendelstütze dient gleichzeitig als Drehmomentenstütze für den Antrieb. Durch die optionale Krafteinleitung über das Lager ist beispielsweise eine entsprechende Linienkraftkorrektur möglich.

Um eine entsprechende Lagerkraft zu erzeugen, kann die Krafteinleitung in dem Ring beispielsweise über einen Winkelhebel erfolgen.

Bei Verwendung eines nicht selbstausgleichenden Lagers muss in der Kulissenführung ein Freiheitsgrad erzeugt werden, um eine jeweilige, zwischen dem Walzenmantel und dem Joch auftretende Winkeldifferenz auszugleichen. Zudem muss die Kulissenführung mit der Drehmomentenstütze an dem Lagergehäuse bzw. dem Getriebe so abgestimmt sein, dass das System nicht überbestimmt ist.

Es ist keine externe Drehmomentenstütze am Getriebegehäuse mehr erforderlich, so dass das Antriebsmoment keinen direkten Einfluss auf die Linienlast mehr besitzt.

Durch die Möglichkeit der Krafteinleitung in die Lagerebene sind beispielsweise Linienlastkorrekturen sowie eine Arretierung des Walzenmantels möglich. Die beispielsweise über einen Winkelhebel erfolgende Krafteinleitung ist ohne Schwächung des Jochquerschnitts an hochbelasteten Stellen möglich.

Die Erfindung wird im Folgenden anhand von Ausführungsbeispielen unter Bezugnahme auf die Zeichnung näher erläutert; in dieser zeigen:
- Figur 1: eine schematische Längsschnittdarstellung des antriebsseitigen Endes einer beispielhaften Ausführungsform der erfindungsgemäßen Biegeausgleichswalze, wobei der Schnitt senkrecht zur Pressebene geführt ist,
- Figur 2: eine schematische Längsschnittdarstellung des in der Figur 1 gezeigten antriebsseitigen Endes der Biegeausgleichswal- ze, wobei der Schnitt im vorliegenden Fall jedoch parallel zur Pressebene geführt ist, und
- Figur 3: eine vergrößerte perspektivische Darstellung der doppelarmigen Pendelstütze.

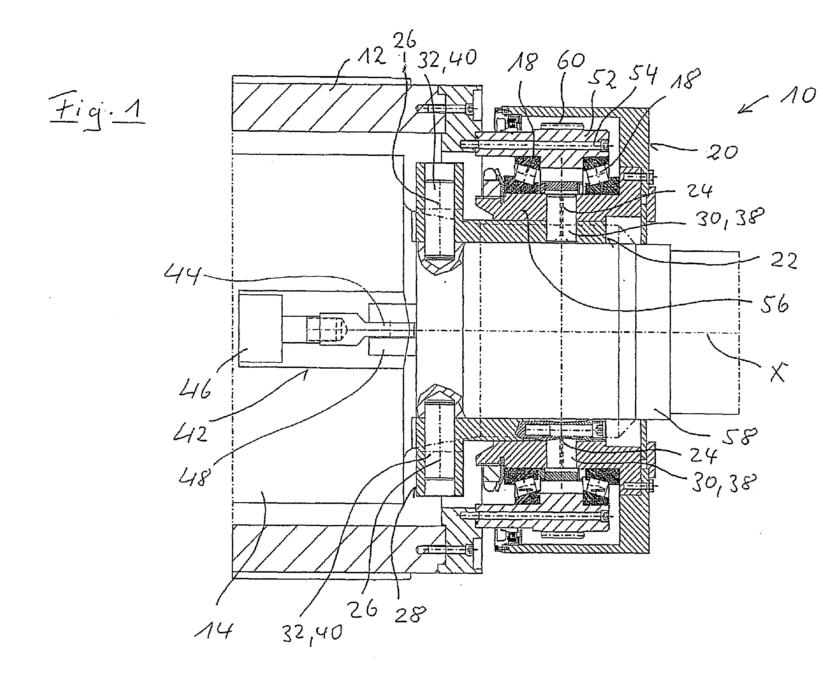

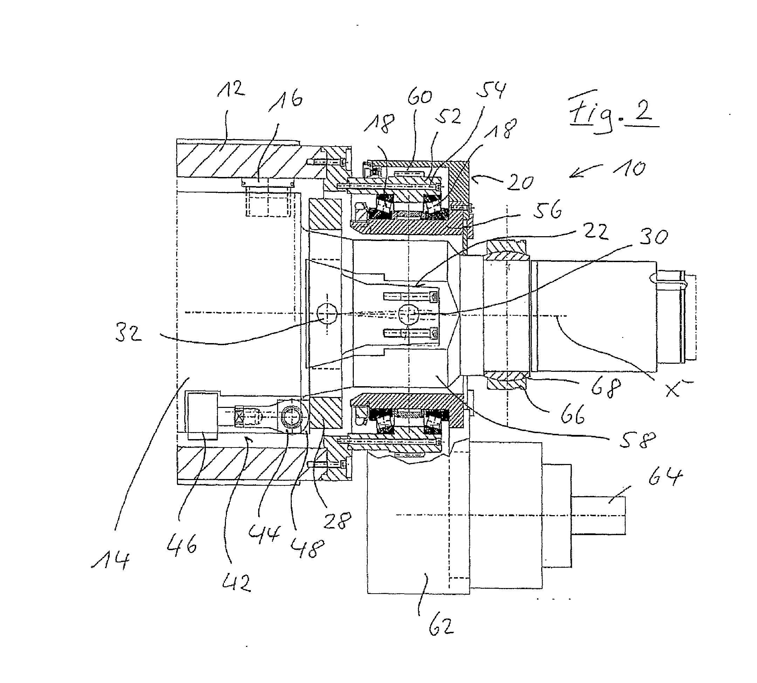

In den Figuren 1 und 2 ist im Längsschnitt jeweils das antriebsseitige Ende einer beispielhaften Ausführungsform einer erfindungsgemäßen Biegeausgleichswalze 10 gezeigt, wobei in der Figur 1 der Schnitt senkrecht zur Pressebene und in der Figur 2 parallel zur Pressebene geführt ist.

Die Biegeausgleichswalze 10 umfasst einen umlaufenden Walzenmantel 12, ein den Walzenmantel 12 axial durchsetzendes, drehfest gelagertes Joch 14 sowie wenigstens ein, vorzugsweise eine Vielzahl von zwischen Joch 14 und Walzenmantel 12 angeordneten Stützelementen 16 (vgl. Figur 2) zur Ausübung einer Stützkraft auf die Innenseite des Walzenmantels 12 in der Pressebene.

Das Ende des Walzenmantels 12 ist durch wenigstens ein Lager, im vorliegenden Fall beispielsweise zwei axial beabstandete Wälzlager 18 drehbar in oder an einem Lagergehäuse 20 gelagert, das in der weiter unten noch näher zu beschreibenden Art und Weise bezüglich des Jochs 14 gegen Verdrehung gesichert ist.

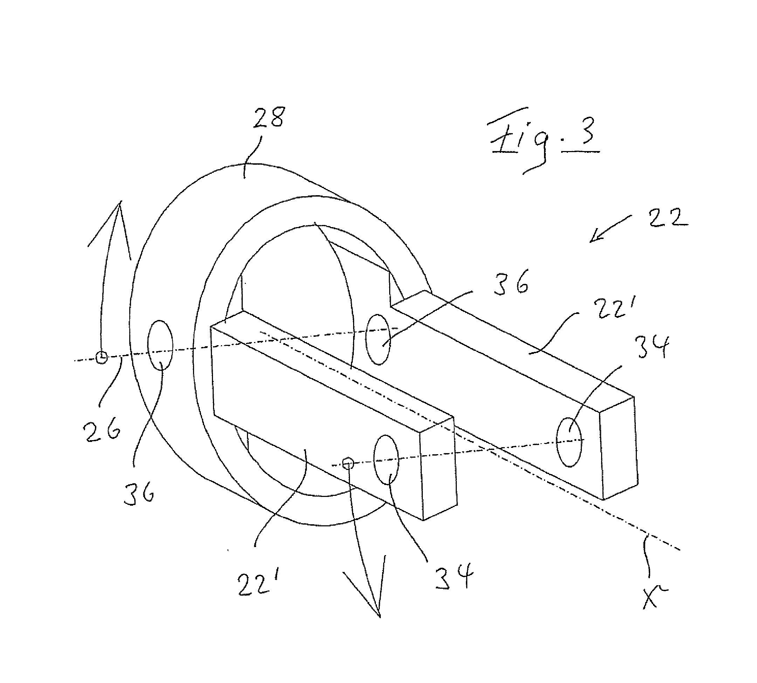

Das Lagergehäuse 20 ist über eine doppelarmige Pendelstütze 22 (vgl. auch Figur 3) mit dem Joch 14 gekoppelt. Dabei sind die Arme 22' dieser doppelarmigen Pendelstütze 22 auf einander gegenüberliegenden, jeweils um 90° gegenüber der Pressebene versetzten Seiten des Jochs 14 angeordnet.

Die beiden Arme 22' der Pendelstütze 22 sind im Bereich eines Endes jeweils am Lagergehäuse 20 und im Bereich des anderen Endes jeweils am Joch 14 angelenkt. Dabei erstrecken sich die Gelenkachsen 24 bzw. 26 jeweils senkrecht zur Pressebene.

Die doppelarmige Pendelstütze 22 lässt also einerseits einen bestimmten Winkelversatz zwischen Mantelende und Joch 14 zu, während sie andererseits das Lagergehäuse 20 gegen eine Verdrehung relativ zum Joch 14 sichert. Wie am besten anhand der Figur 2 zu erkennen ist, ist die Biegeausgleichswalze 10 im vorliegenden Fall als selbstbelastende Walze ausgeführt. Der Walzenmantel 12 ist also in der Pressebene relativ zum Joch 14 verstellbar.

Die doppelarmige Pendelstütze 22 umfasst einen Ring 28, mit dem die beiden Arme 22' an ihrem inneren, in den Figuren 1 bis 3 linken Ende jeweils fest verbunden sind. Dabei sind die beiden Arme 22' der Pendelstütze 22 über diesen Ring 28 am Joch 14 angelenkt. Die betreffende Gelenkachse 26 verläuft also durch einander gegenüberliegende Wandungsteile des Ringes 28.

Die Gelenkverbindungen 30, 32 zwischen der doppelarmigen Pendelstütze 22 und dem Lagergehäuse 20 bzw. dem Joch 14 sind jeweils durch Bolzenverbindungen gebildet. Entsprechend sind die äußeren, in den Figuren 1 bis 3 rechten Enden der Arme 22' der doppelarmigen Pendelstütze 22 jeweils mit einer Durchgangsöffnung 34 und der Ring 28 mit zwei auf einander gegenüberliegenden Seiten vorgesehenen Durchgangsöffnungen 36 für die betreffenden Bolzen 38 bzw. 40 versehen.

Wie am besten anhand der Figur 3 zu erkennen ist, sind die beiden Arme 22' der Pendelstütze 22 zueinander parallel.

Der Ring 28 umschließt das Joch 14, wobei er um eine durch die Gelenkverbindungen 32 zwischen Ring 28 und Joch 14 definierte, der Gelenkachse 26 entsprechende Schwenkachse relativ zum Joch 14 verschwenkbar ist. Wie anhand der Figur 2 zu erkennen ist, können am Joch 14 abgestützte Mittel 42 vorgesehen sein, über die der Ring 28 mit einer zumindest im Wesentlichen axial gerichteten, den Ring 28 in Schwenkrichtung belastenden Kraft beaufschlagbar ist. Gemäß Figur 2 greifen diese Mittel 42 am unteren Ende des Ringes 28 an. Dabei können diese Mittel 42 beispielsweise einen Winkelhebel 44 umfassen, der zum Beispiel über eine Zylinder/Kolben-Einheit 46 entsprechend beaufschlagbar ist. Wie anhand der Figur 2 zu erkennen ist, ist der Winkelhebel 44 an einem unteren Ansatz 48 des Ringes 28 angelenkt.

Die Gelenkverbindungen 30 zwischen der doppelarmigen Pendelstütze 22 und dem Lagergehäuse 20 sind axial im Bereich zwischen den beiden Wälzlagern 18 angeordnet.

Wie insbesondere anhand der Figur 1 zu erkennen ist, können die beiden Arme 22' der Pendelstütze 22 an auf einander gegenüberliegenden Seiten des Jochs 14 vorgesehenen Kulissenflächen einer eine Selbstbelastung der Walze 10 ermöglichenden Kulissenführung anliegen.

Bei einem zwischen dem Walzenmantelende und dem Lagergehäuse 20 vorgesehenen nicht selbstausgleichenden Lager ist die eine Selbstbelastung der Walze 10 ermöglichende Kulissenführung zweckmäßigerweise so ausgeführt, dass ein bestimmter Winkelversatz zwischen Walzenmantelende und Joch 14 zugelassen ist.

Die Hubbewegung des Walzenmantels 12 relativ zum Joch 14 kann beispielsweise durch eine jeweilige taschenförmige Gestaltung und/oder einen jeweiligen Überstand der am Joch 14 vorgesehenen Kulissenflächen 50 begrenzt sein.

Bei der vorliegenden, rein beispielhaften Ausführungsform umfasst das Walzenmantelende einen axialen Fortsatz 52, der über Schrauben 54 am restlichen Walzenmantel 12 befestigt ist. Dabei ist im vorliegenden Fall dieser axiale Fortsatz 52 durch die Wälzlager 18 drehbar in bzw. an dem Lagergehäuse 20 gelagert.

Anhand der Figuren 1 und 2 ist überdies zu erkennen, dass das Walzenmantelende bzw. der axiale Fortsatz 52 durch die beiden Wälzlager 18 drehbar auf einem sich in den Bereich zwischen Walzenmantelende bzw. axialem Fortsatz 52 und Joch 14 erstreckenden axialen Ansatz 56 des Lagergehäuses 20 gelagert ist. Dabei ist die doppelarmige Pendelstütze 22 an dem axialen Ansatz 56 des Lagergehäuses 20 angelenkt.

Wie wieder anhand der Figuren 1 und 2 zu erkennen ist, sind das Lagergehäuse 20 und die doppelarmige Pendelstütze 22 im Bereich eines gegenüber dem zentralen Bereich des Jochs 14 verjüngten Jochzapfens 58 vorgesehen.

Außen am axialen Fortsatz 52 ist ein Zahnkranz 60 vorgesehen, der mit einem Antriebsritzel eines Antriebs 62 (vgl. Fig. 2) kämmt, dessen Ritzelwelle 64 parallel zur Walzenachse X verläuft und beispielsweise durch Wälzlager in dem Lagergehäuse 20 gelagert sein kann.

Das Joch 14 kann endseitig an einem Gestell 66 durch ein Pendellager 68 gehalten sein (vgl. Figur 2).

Wie am besten anhand der Figur 1 zu erkennen ist, die einen Schnitt durch die Kulisse wiedergibt, wird das Walzenmantelende durch die doppelarmige Pendelstütze 22 bezüglich des Jochs 14 axial geführt.

Gleichzeitig ist das Walzenmantelende durch diese Pendelstütze 22 bezüglich des Jochs 14 gegen Verdrehung gesichert. In der Figur 3 ist die entsprechende Aufnahme von Drehmomenten durch die über den Ring 28 miteinander verbundenen Arme 22' der Pendelstütze 22 durch Pfeile angedeutet.

Durch Krafteinleitung in den Ring 28 über beispielsweise einen Winkelhebel 44 kann eine entsprechende Lagerkraft erzeugt werden (vgl. insbesondere Figur 2).

### Bezugszeichenliste

- 10: Biegeausgleichswalze
- 12: Walzenmantel
- 14: Joch
- 16: Stützelement
- 18: Lager, Wälzlager
- 20: Lagergehäuse
- 22: doppelarmige Pendelstütze
- 22': Arm
- 24: Gelenkachse
- 26: Gelenkachse, Schwenkachse
- 28: Ring
- 30: Gelenkverbindung
- 32: Gelenkverbindung
- 34: Durchgangsöffnung
- 36: Durchgangsöffnung
- 38: Bolzen
- 40: Bolzen
- 42: Mittel
- 44: Winkelhebel
- 46: Zylinder/Kolben-Einheit
- 48: Ansatz
- 50: Kulissenfläche
- 52: axialer Fortsatz
- 54: Schraube
- 56: axialer Ansatz
- 58: Jochzapfen
- 60: Zahnkranz
- 62: Antrieb
- 64: Ritzelwelle
- 66: Gestell
- 68: Pendellager

## Patentansprüche

1. Biegeausgleichswalze (10) mit einem umlaufenden Walzenmantel (12), einem den Walzenmantel (12) axial durchsetzenden, drehfest gelagerten Joch (14) und wenigstens einem zwischen Joch (14) und Walzenmantel (12) angeordnetem Stützelement (16) zur Ausübung einer Stützkraft auf die Innenseite des Walzenmantels (12) in einer Pressebene, wobei wenigstens ein Ende des Walzenmantels (12) durch wenigstens ein Lager (18) drehbar in oder an einem Lagergehäuse (20) gelagert ist, das bezüglich des Jochs (14) gegen Verdrehung gesichert ist,
**dadurch gekennzeichnet,**
**dass** das Lagergehäuse (20) über eine doppelarmige Pendelstütze (22) mit dem Joch (14) gekoppelt ist, deren Arme (22') auf einander gegenüberliegenden, jeweils um 90° gegenüber der Pressebene versetzten Seiten des Jochs (14) angeordnet sind und im Bereich eines Endes jeweils am Lagergehäuse (20) und im Bereich des anderen Endes jeweils am Joch (14) angelenkt sind, wobei sich die Gelenkachsen (24 bzw. 26) jeweils senkrecht zur Pressebene erstrecken, und wobei das Lagergehäuse (20) über diese doppelarmige Pendelstütze (22) gegen Verdrehung gesichert ist.

2. Biegeausgleichswalze nach Anspruch 1,
**dadurch gekennzeichnet,**
**dass** sie als selbstbelastende Walze (10) ausgeführt ist.

3. Biegeausgleichswalze nach Anspruch 1 oder 2,
**dadurch gekennzeichnet,**
**dass** die doppelarmige Pendelstütze (22) einen Ring (28) umfasst, mit dem die beiden Arme (22') an einem Ende jeweils fest verbunden sind.

4. Biegeausgleichswalze nach Anspruch 3,
**dadurch gekennzeichnet,**
**dass** die beiden Arme (22') der Pendelstütze (22) über den Ring (28) am Joch (14) angelenkt sind.

5. Biegeausgleichswalze nach einem der vorhergehenden Ansprüche,
**dadurch gekennzeichnet,**
**dass** die Gelenkverbindungen (30, 32) zwischen der doppelarmigen Pendelstütze (22) und dem Lagergehäuse (20) bzw. dem Joch (14) jeweils durch eine Bolzenverbindung gebildet sind.

6. Biegeausgleichswalze nach einem der vorhergehenden Ansprüche,
**dadurch gekennzeichnet,**
**dass** die beiden Arme (22') der Pendelstütze (22) zueinander parallel sind.

7. Biegeausgleichswalze nach einem der vorhergehenden Ansprüche,
**dadurch gekennzeichnet,**
**dass** der Ring (28) das Joch (14) umschließt und um eine durch die Gelenkverbindungen (32) zwischen Ring (28) und Joch (14) definierte Schwenkachse (26) relativ zum Joch (14) verschwenkbar ist.

8. Biegeausgleichswalze nach Anspruch 7,
**dadurch gekennzeichnet,**
**dass** am Joch (14) abgestützte Mittel (42) vorgesehen sind, über die der Ring (28) mit einer zumindest im Wesentlichen axial gerichteten, den Ring (28) in Schwenkrichtung belastenden Kraft beaufschlagbar ist.

9. Biegeausgleichswalze nach Anspruch 8,
**dadurch gekennzeichnet,**
**dass** die Mittel (42) wenigstens einen Winkelhebel (44) umfassen.

10. Biegeausgleichswalze nach einem der vorhergehenden Ansprüche,
**dadurch gekennzeichnet,**
**dass** die Gelenkverbindungen (30) zwischen der doppelarmigen Pendelstütze (22) und dem Lagergehäuse (20) axial im Bereich des zwischen dem Walzenmantelende und dem Lagergehäuse (20) vorgesehen Lagers (18) angeordnet sind.

11. Biegeausgleichswalze nach einem der vorhergehenden Ansprüche,
**dadurch gekennzeichnet,**
**dass** die beiden Arme (22') der Pendelstütze (22) an auf einander gegenüberliegenden Seiten des Jochs (14) vorgesehenen Kulissenflächen (50) einer eine Selbstbelastung der Walze (10) ermöglichenden Kulissenführung anliegen.

12. Biegeausgleichswalze nach einem der vorhergehenden Ansprüche,
**dadurch gekennzeichnet,**
**dass** bei einem zwischen dem Walzenmantelende und dem Lagergehäuse (20) vorgesehenen nicht selbstausgleichenden Lager die eine Selbstbelastung der Walze (10) ermöglichende Kulissenführung einen bestimmten Winkelversatz zwischen Walzenmantelende und Joch (14) zulässt.

13. Biegeausgleichswalze nach einem der vorhergehenden Ansprüche,
**dadurch gekennzeichnet,**
**dass** die Hubbewegung des Walzenmantels (12) relativ zum Joch (14) durch eine jeweilige taschenförmige Gestaltung und/oder einen jeweiligen Überstand der am Joch (14) vorgesehenen Kulissenflächen (50) begrenzt ist.

14. Biegeausgleichswalze nach einem der vorhergehenden Ansprüche,
**dadurch gekennzeichnet,**
**dass** das Walzenmantelende einen axialen Fortsatz (52) umfasst und
**dass** dieser axiale Fortsatz (52) durch das Lager (18) drehbar in bzw. an dem Lagergehäuse (20) gelagert ist.

15. Biegeausgleichswalze nach einem der vorhergehenden Ansprüche,
**dadurch gekennzeichnet,**
**dass** das Walzenmantelende bzw. der axiale Fortsatz (52) durch das Lager (18) drehbar auf einem sich in den Bereich zwischen Walzenmantelende bzw. axialem Fortsatz (52) und Joch (14) erstreckenden axialen Ansatz (56) des Lagergehäuses (20) gelagert ist.

16. Biegeausgleichswalze nach Anspruch 15,
**dadurch gekennzeichnet,**
**dass** die doppelarmige Pendelstütze (22) an dem axialen Ansatz (56) des Lagergehäuses (20) angelenkt ist.

17. Biegeausgleichswalze nach einem der vorhergehenden Ansprüche,
**dadurch gekennzeichnet,**
**dass** der Walzenmantel (12) durch zwei axial beabstandete Wälzlager (18) in bzw. an dem Lagergehäuse (20) gelagert ist.

18. Biegeausgleichswalze nach Anspruch 17,
**dadurch gekennzeichnet,**
**dass** die Gelenkverbindungen (30) zwischen der doppelarmigen Pendelstütze (22) und dem Lagergehäuse (20) axial im Bereich zwischen den beiden Wälzlagern (18) angeordnet sind.

19. Biegeausgleichswalze nach einem der vorhergehenden Ansprüche,
**dadurch gekennzeichnet,**
**dass** das Lagergehäuse (20) und die doppelarmige Pendelstütze (22) im Bereich eines gegenüber dem zentralen Bereich des Jochs (14) verjüngten Jochzapfens (58) vorgesehen sind.
